# EUROPÄISCHE PATENTSCHRIFT

(11) **EP 0 560 202 B1**
(45) Veröffentlichungstag und Bekanntmachung des Hinweises auf die Patenterteilung: **12.06.1996**
(21) Anmeldenummer: 93103427.6
(22) Anmeldetag: 03.03.1993
(51) Int. Cl.: F16H 3/089

(54) **Mehrgängiges Wechselgetriebe für Kraftfahrzeuge**
Multi-speed gearbox for motor vehicles
Transmission à vitesses multiples pour véhicules automobiles

(30) Priorität: 13.03.1992 DE 4207989
(43) Veröffentlichungstag der Anmeldung: 15.09.1993
(73) Patentinhaber: FORD-WERKE AKTIENGESELLSCHAFT, D-50725 Köln (DE); FORD MOTOR COMPANY LIMITED, Brentwood, Essex CM13 3BW (GB); FORD FRANCE S. A., F-92506 Rueil-Malmaison (FR)
(72) Erfinder: Hofmann, Harald, W-5000 Koeln 71 (DE)
(74) Vertreter: Messulam, Alec Moses

(56) Entgegenhaltungen:
- EP-A- 0 083 747
- EP-A- 0 224 407
- EP-A- 0 239 553
- EP-A- 0 366 493
- DE-A- 3 320 494
- DE-A- 4 116 189
- DE-B- 1 188 449

## Beschreibung

Die Erfindung bezieht sich auf ein mehrgängiges Wechselgetriebe für Kraftfahrzeuge, der im Oberbegriff des Patentanspruches 1 erläuterten Art. Ein derartiges Getriebe ist aus der EP-A 239 553 bekannt, bei der alle für den Rückwärtsgang notwendigen Zahnräder den Abtriebsritzeln abgewandt angeordnet sind.

Ähnliche Wechselgetriebe für Kraftfahrzeuge der sogenannten Drei-Wellen-Bauart sind weiterhin aus der GB-A 2 074 669 und der EP-A 0 224 407 bekannt.

Solche mehrgängigen Wechselgetriebe für Kraftfahrzeuge weisen eine mit Festräder versehene Eingangswelle und eine erste mit Losräder versehene Abtriebswelle und eine zweite mit Losrädern versehene Abtriebswelle auf, die in einem Getriebegehäuse drehbar gelagert sind und wobei beide Abtriebswellen über je ein festes Abtriebsritzel in Eingriff mit einem Antriebszahnrad eines Differentialgetriebes stehen, das über Gleichlaufgelenke Frontantriebswellen antreibt. Vorzugsweise sind alle Gänge einschließlich des Rückwärtsganges durch benachbart den Losrädern angeordnete Synchronisiereinrichtungen synchronisiert.

Bei den bekannten mehrgängigen Wechselgetrieben der Dreiwellenbauart ist jeweils zum Erreichen der Drehrichtungsumkehr für den Rückwärtsgang eine zusätzliche Rückwärtsgangwelle oder -achse erforderlich, so daß das Getriebe an sich vier Wellen aufweist.

Aus der DE-C 33 20 494 ist ein mehrgängiges Wechselgetriebe für Kraftfahrzeuge bekannt, das als Getriebe in sogenannter Zwei-Wellen-Bauart ausgeführt ist und bei dem sowohl auf der Eingangswelle als auch auf der Abtriebswelle Fest- und Losräder und den Losrädern benachbarte Synchronisiereinrichtungen angeordnet sind und wobei das Losrad des Rückwärtsganges auf einer dritten Welle angeordnet ist, die jedoch keine Abtriebswelle darstellt.

Bei dem vorstehend genannten Wechselgetriebe wird die für den Rückwärtsgang erforderliche Drehrichtungsumkehr dadurch erzielt, daß das mit dem Festrad des ersten Ganges in Eingriff stehende Losrad des ersten Ganges in Eingriff mit dem Losrad des Rückwärtsganges steht. Um das umgekehrte Antriebsmoment des Rückwärtsganges auf die Abtriebswelle zu übertragen, ist auf der dritten Welle ein weiteres Losrad für den Rückwärtsgang erforderlich. Dieses steht in Eingriff mit einem Losrad eines weiteren Ganges auf der Eingangswelle, welches wieder in Eingriff steht mit seinem entsprechenden Festrad auf der Abtriebswelle, von wo das Antriebsmoment über das Abtriebsritzel zum Differentialgetriebe übertragen wird.

Bei dem vorstehend genannten Wechselgetriebe erhöhen die für den Rückwärtsgang erforderlichen zwei benachbarten Losräder des Rückwärtsganges auf der dritten Welle den Bauaufwand und Bauraum, und die in der Bildung des Rückwärtsganges eingeschalteten mehreren Fest- und Losräder zweier Vorwärtsgänge müssen bei der Auslegung des Rückwärtsganges mit berücksichtigt werden. So kann die Übersetzung des Rückwärtsganges z.B. eine Änderung erfahren, wenn aus antriebstechnischen Gründen die Übersetzung einer der beiden Vorwärtsgänge geändert werden soll, die zur Bildung des Rückwärtsganges mit herangezogen sind.

Weiterhin zeigt die DE-A 4 116 189 ein gattungsähnliches Getriebe mit einem auf einer weiteren Umkehrwelle angeordnetem Rückwärtsgangzahnrad.

Die Aufgabe der Erfindung ist es, ein mehrgängiges Wechselgetriebe für Kraftfahrzeuge der im Oberbegriff des Patentanspruches 1 erläuterten Art weiterzubilden, um die bekannte Nutzung eines Losrades eines Vorwärtsganges auf einer der beiden Abtriebswellen und die Anordnung des Rückwärtsgangrades auf der anderen Abtriebswelle derart zu optimieren, daß die für die Übertragung des Rückwärtsgang-Drehmomentes erforderliche Getriebewelle äußerst kurz und steif ausgebildet und in einem Bereich angeordnet werden kann, in dem eine große Steifigkeit des Getriebegehäuses gegeben ist.

Gemäß der Erfindung wird diese Aufgabe durch die im Patentanspruch aufgezeigten Merkmale gelöst.

Dadurch, daß auf der Eingangswelle die Festräder für den ersten und zweiten Gang und auf der ersten Abtriebswelle die zugehörigen Losräder mit ihrer dazwischenliegenden doppelseitigen Synchronisiereinrichtung angeordnet sind sowie auf der zweiten Abtriebswelle das Losrad des Rückwärtsganges mit einer einseitigen Synchronisiereinrichtung benachbart einem Abtriebsritzel angeordnet ist und in Eingriff mit dem auf der ersten Abtriebswelle benachbart dem anderen Abtriebsritzel angeordneten Losrad des ersten Ganges steht, wird der Vorteil erzielt, daß nur die Übersetzung des ersten Ganges bei der Auslegung der Übersetzung des Rückwärtsganges berücksichtigt werden muß und daß der durch seine niedrige Übersetzung hoch belastete Rückwärtsgang im vorderen Bereich des Getriebegehäuses liegt, wo dessen Steifigkeit hoch und dementsprechend eine günstige Aufnahme der Kräfte ermöglicht ist.

Es ist selbstverständlich, daß eine solche Anordnung und Auslegung des synchronisierten Rückwärtsganges sowohl bei einem 4-gängigen Wechselgetriebe, bei einem 5-gängigen Wechselgetriebe, wie im Ausführungsbeispiel gezeigt, als auch bei einem 6-gängigen Wechselgetriebe, wie in einem Getriebeschema gezeigt, möglich ist.

Eine solche Anordnung des Rückwärtsganges ist also unabhängig von der Anzahl der schaltbaren Gänge und somit für alle Schaltgetriebe mit gleichem oder ähnlichem Grundaufbau anwendbar.

Die Erfindung wird anhand eines in den Zeichnungen gezeigten Ausführungsbeispieles näher erläutert. Es zeigt:
- Fig. 1: eine Getriebeaufrollung eines 5-Gang-Wechselgetriebes mit einem synchronisierten Rückwärtsgang gemäß der Erfindung;
- Fig. 2: eine prinzipielle Darstellung der Lage der Wellen und der den Rückwärtsgang bildenden Zahnräder des Getriebes nach Fig. 1;
- Fig. 3: ein Getriebeschaubild des 5-Gang-Wechselgetriebes mit einer möglichen Bausatz-Erweiterung auf ein 6-Gang-Getriebe und
- Fig. 4: ein Schaltschema für das 5-Gang-Getriebe bzw. das auf ein 6-Gang-Getriebe erweiterte Getriebe.

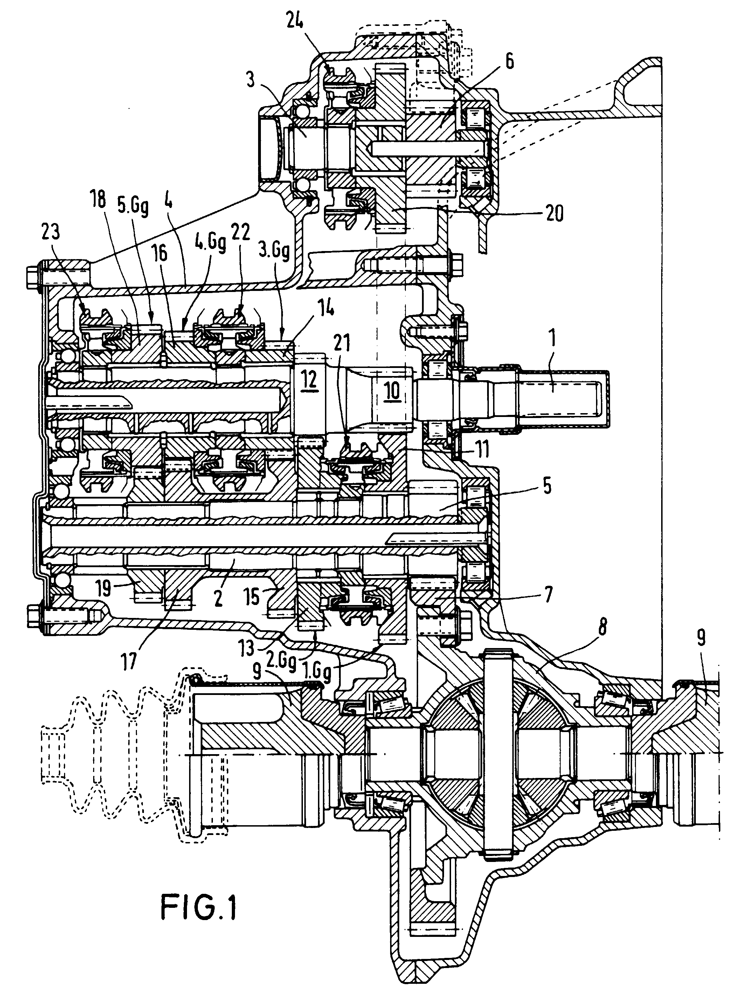

In der Fig. 1 sind nur jeweils die Bauteile mit Bezugszeichen versehen, die für eine Erläuterung der Erfindung erforderlich sind.

Eine Eingangswelle 1 weist Fest- und Losräder des Getriebes auf und eine erste Abtriebswelle 2 und eine zweite Abtriebswelle 3 weisen weitere Fest- und Losräder des Getriebes auf, die mit entsprechenden Los- und Festrädern auf der Eingangswelle 1 in Eingriff stehen. Die Eingangswelle 1 und die beiden Abtriebswellen 2 und 3 sind in herkömmlicher Weise über entsprechende Lagerungen, z.B. in Form von Wälzlagerungen in einem Getriebegehäuse 4 drehbar gelagert.

Die beiden Abtriebswellen 2 und 3 weisen feste Abtriebsritzel 5 und 6 auf, die beide in Eingriff mit einem Antriebszahnrad 7 eines Differentialgetriebes 8 stehen, das über Gleichlaufgelenke 9 Frontantriebswellen (nicht gezeigt) antreibt.

Auf der Eingangswelle 1 sind eingangsseitig die Festräder 10 und 12 und auf der ersten Abtriebswelle 2 ausgangsseitig sind die Losräder 11 und 13 für den 1. und 2. Gang angeordnet. Auf der Eingangswelle 1 sind nachfolgend die Losräder 14 und 16 und auf der ersten Abtriebswelle 2 die Festräder 15 und 17 für den 3. und 4. Gang angeordnet. Danach folgt auf der Eingangswelle 1 das Losrad 18 und auf der ersten Abtriebswelle 2 das Festrad 19 für den 5. Gang.

Ein Losrad 20 für den Rückwärtsgang ist auf der zweiten Abtriebswelle 3 angeordnet.

Jeweils zwischen den Losrädern 11 und 13 für den 1. und 2. Gang ist deren doppelseitige Synchronisiereinrichtung 21 auf der ersten Abtriebswelle 2 angeordnet. In ähnlicher Weise ist zwischen den Losrädern 14 und 16 für den 3. und 4. Gang deren doppelseitige Synchronisiereinrichtung 22 auf der Eingangswelle 1 angeordnet. Benachbart dem Losrad 18 für den 5. Gang und benachbart dem Losrad 20 für den Rückwärtsgang ist jeweils eine einseitige Synchronisiereinrichtung 23 auf der Eingangswelle 1 bzw. eine Synchronisiereinrichtung 24 auf der zweiten Abtriebswelle 3 angeordnet.

Über die entsprechenden Synchronisiereinrichtungen 21, 22, 23 und 24 kann jeweils eines der benachbarten Losrädermit der es tragenden Welle verbunden werden um den entsprechenden Gang zu schalten.

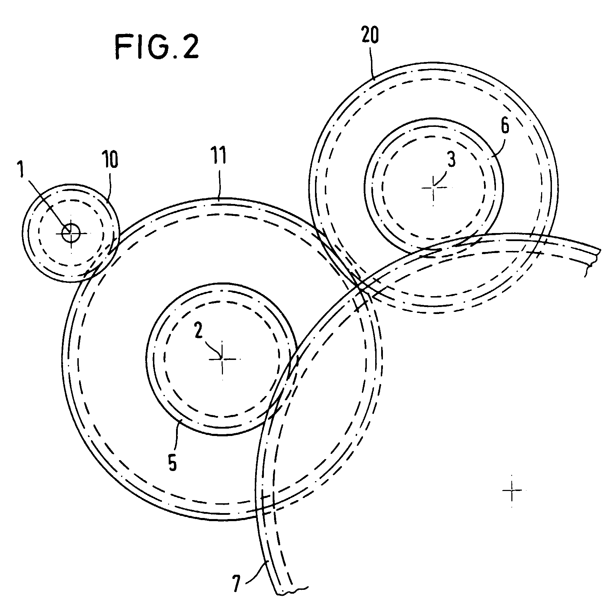

In Fig. 2 ist die Lage der drei Wellen des Wechselgetriebes aufgezeigt und die zur Bildung des Rückwärtsganges und des Endabtriebes erforderlichen Zahnräder sind mit ihren Kopf- Teil- und Fußkreisdurchmessern angedeutet.

An der Eingangswelle 1 ist das Festrad 10 für den 1. Gang ausgebildet. Auf der ersten Abtriebswelle 2 ist das Losrad 11 für den 1. Gang drehbar gelagert angeordnet. Ein erstes Abtriebsritzel 5 ist einstückig an der ersten Abtriebswelle 2 ausgebildet. An der zweiten Abtriebswelle 3 ist in ähnlicher Weise ein zweites Abtriebsritzel 6 einstückig ausgebildet und weiterhin ist ein Losrad 20 für den Rückwärtsgang drehbar gelagert angeordnet.

Die Kraftübertragung im Rückwärtsgang erfolgt von der Eingangswelle 1 über das Festrad 10 auf das Losrad 11, mit diesem Losrad 11 des 1. Ganges steht das Losrad 20 des Rückwärtsganges in Eingriff und das Losrad 20 des Rückwärtsganges wird über seine einseitige Synchronisiereinrichtung 24 mit der zweiten Abtriebswelle 3 verbunden und dementsprechend überträgt das zweite Abtriebsritzel 6 die Rückwärtsdrehung des Rückwärtsganges auf das Antriebszahnrad 7 des Differentialgetriebes 8.

Der unmittelbare Eingriff des Losrades 20 des Rückwärtsganges in das Losrad 11 des 1. Ganges ist in Fig. 1 durch Strich-Punkt-Linien angedeutet.

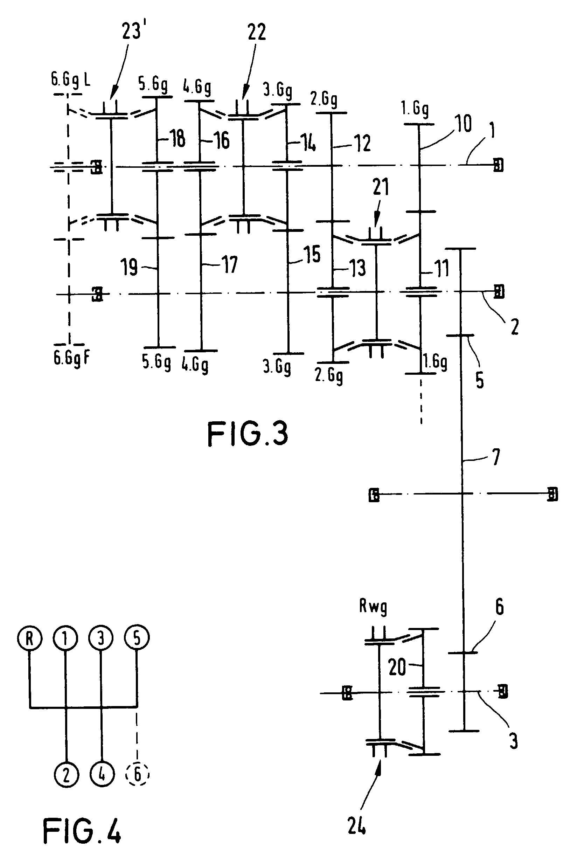

In Fig. 3 ist ein Getriebeschema des 5-Gang-Wechselgetriebes gemäß der Erfindung gezeigt, wobei eine mögliche Bausatz-Erweiterung des Getriebes auf ein 6-Gang-Getriebe in gestrichelten Linien angedeutet ist. Die Eingangswelle 1, die Abtriebswellen 2 und 3 und die Abtriebsritzel 5 und 6 sowie das Antriebsrad 7 für das Differentialgetriebe sind bezeichnet. Ebenso sind die Fest- und Losräder der Gänge 1 bis 5 und des Rückwärtsganges mit den gleichen Bezugszeichen versehen wie in Fig. 1.

Lediglich für den als Anbausatz ausgebildeten 6. Gang ist dessen entsprechendes Losrad als 6. Gg. L und dessen Festrad als 6. Gg. F bezeichnet.

Für ein Getriebe der oben erläuterten Art kann z.B. ein Schaltschema der in Fig. 4 gezeigten Form angewendet werden.

Die Auslegung des mehrgängigen Wechselgetriebes in der Form, daß seine Grundform der Zwei-Wellen-Bauart entspricht, bringt den Vorteil mit sich, daß das als 5-Gang Wechselgetriebe ausgelegte Getriebe bei Bedarf auf relativ einfache Weise zu einem 6-Gang Wechselgetriebe erweitert werden kann, indem eine sogenannte "add-on-unit" für den 6. Gang angefügt wird. Eine solche Bausatzlösung läßt die Erweiterung des Getriebeprogrammes, z.B. für eine Sportversion, offen.

## Patentansprüche

1. Mehrgängiges Wechselgetriebe für Kraftfahrzeuge mit
- einer Fest- und Losräder aufweisenden Eingangswelle (1) und einer ersten Los- und Festräder aufweisenden Abtriebswelle (2) sowie einer zweiten Abtriebswelle (3), die in einem Getriebegehäuse (4) drehbar gelagert sind,
- wobei beide Abtriebswellen (2 und 3) über je ein festes Abtriebsritzel (5 und 6) mit einem Antriebszahnrad (7) eines Differentialgetriebes (8) in Eingriff stehen, das über Gleichlaufgelenke (9) Frontantriebswellen antreibt,
- wobei alle Gänge einschließlich des Rückwärtsganges über Synchronisiereinrichtungen synchronisiert sind,
- wobei zur Bildung des ersten und zweiten Ganges auf der Eingangswelle (1) zwei Festräder (10 und 12) angeordnet sind und mit zwei auf der ersten Abtriebswelle (2) angeordneten Losrädern (11 und 13) in Eingriff stehen und dazwischenliegend eine doppelseitige Synchronisiereinrichtung (21) angeordnet ist,
- und wobei zur Bildung des Rückwärtsganges auf der zweiten Abtriebswelle (3) ein Losrad (20) und eine einseitige Synchronisiereinrichtung (24) angeordnet sind,
**dadurch gekennzeichnet,**
daß das Losrad (20) benachbart dem Abtriebsritzel (6) angeordnet ist und mit dem auf der ersten Abtriebswelle (2) benachbart dem Abtriebsritzel (5) angeordneten Losrad (11) des ersten Ganges in Eingriff steht.

## Claims

1. A multispeed change-speed gearbox for motor vehicles comprising:
- rotatably mounted in a gearbox housing (4), an input shaft (1) carrying fixed gear wheels and loose gear wheels, a first driven shaft (2) carrying loose gear wheels and fixed gear wheels, and a second driven shaft (3),
- both the driven shafts (2 and 3) engaging, via a respective fixed final drive pinion (5 and 6), with a driving gear (7) of a differential (8) that drives front drive shafts by way of constant velocity joints (9),
- all gears, including the reverse gear, being synchronised through synchronisers,
- two fixed gear wheels (10 and 12) for the first and second gears being carried on the input shaft (1) and engaging with two loose gear wheels (11 and 13) for the first and second gears which are carried on the first driven shaft and have a double-sided synchroniser (21) interposed between them,
- and the second driven shaft (3) carrying, for forming the reverse gear, a loose gear wheel (20) and a single-sided synchroniser (24)
characterised in that
the loose gear wheel (20) is arranged adjacent to the final drive pinion (6) and meshes with the loose gear wheel (11) of the first gear carried on the first driven shaft (2) adjacent to the final drive pinion (5).

## Revendications

1. Boîte de vitesses à vitesses multiples destinée à des véhicules automobiles et comprenant :
- un arbre d'entrée (1) qui présente des roues calées et des roues folles et un premier arbre de sortie (2) qui présente des roues folles et des roues calées, ainsi qu'un deuxième arbre de sortie (3), ces arbres étant montés tournants dans un carter (4) de la transmission,
- cependant que les deux arbres de sortie (2 et 3) engrènent chacun par l'intermédiaire d'un pignon de sortie fixe (5 et 6) avec une roue dentée d'entraînement (7) d'un différentiel (8) qui entraîne des arbres moteurs avant par l'intermédiaire de joints homocinétiques (9),
- que toutes les vitesses, y compris la marche arrière, sont synchronisées par l'intermédiaire de dispositifs de synchronisation,
- qu'en vue de former la première vitesse et la seconde, deux roues calées (10 et 12) sont disposées sur l'arbre d'entrée (1), et qu'elles engrènent avec deux roues folles (11 et 13) qui sont montées sur le premier arbre de sortie (2), un dispositif de synchronisation bilatéral (21) étant disposé entre ces dernières,
- et qu'en vue de former la marche arrière, une roue folle (20) et un dispositif de synchronisation unilatéral (24) sont disposés sur le deuxième arbre de sortie (3),
caractérisée par le fait que la roue folle (20) est disposée au voisinage du pignon de sortie (6), et qu'elle engrène avec la roue folle (11) de la première vitesse qui est montée sur le premier arbre de sortie (2) au voisinage du pignon de sortie (5).
